# EUROPÄISCHE PATENTANMELDUNG

(11) **EP 2 276 312 A2**
(43) Veröffentlichungstag der Anmeldung: **19.01.2011**
(21) Anmeldenummer: 10181406.9
(22) Anmeldetag: 12.11.1997
(51) Int. Cl.: H04W 76/02

(54) **Verfahren zum Verbindungsaufbau zwischen Umcodiereinrichtungen**

(30) Priorität: 04.12.1996 DE 19650141
(62) Teilanmeldung aus: 97119761.1
(71) Anmelder: IPCom GmbH & Co. KG, 82049 Pullach (DE)
(72) Erfinder: Müller, Jörg-Martin, 71409, Schwaikheim (DE)
(74) Vertreter: Gigerich, Jan

(57) **Zusammenfassung**

Der Datenstrom zwischen den Transcodiereinrichtungen (TCE1, TCE2) eines Mobilfunksystems wird unterteilt in einen ersten Datenstrom mit Abtastwerten für eine Übertragung und einem zweiten Datenstrom mit Signalparametern zur Nutzdatenrekonstruktion. Beide Datenströme sind gleichzeitig übertragbar.
Beim Verbindungsaufbau werden abwechselnd Datenpakete von gleichzeitig übertragenen Abtastwerten und Kennungsinformation als TFO-Ankündigung sowie seine Abtastwerte gesendet. Wenn nach mehrmaliger Wiederholung der Datenpakete keine Quittierung erfolgt, werden nur noch Abtastwerte gesendet.

## Beschreibung

Die Erfindung betrifft ein Verfahren zum Übertragen von Daten, insbesondere GSM-Daten zwischen mindestens zwei Teilnehmern.

### Stand der Technik

Bei bisherigen GSM-Datenverbindungen, insbesondere für digitalisierte Sprachdaten, zwischen mobilen Teilnehmern über ein Kommunikationsnetz, beispielsweise das öffentliche Fernsprechnetz (PSTN - Public Switched Telephone Network), wurden die GSM-Daten in GSM-Format in das Rahmenformat des Kommunikationsnetzes - 64 kbit/s PCM bei PSTN - mittels einer Umcodiereinrichtung/einem Transcoder umgesetzt. Eine solche Transcodierung erfolgt beim Mobilfunksystem DMCS 900 in den Basisstationen bzw. an der A-Schnittstelle beim Übergang auf das PSTN-Kommunikationsnetz. Nach der GSM-Recommendation 0860/0861 erfolgt die digitale Sprachübertragung in sogenannten "TRAU-frames" (transcode and rate adaptor unit); d. h. Übertragungsrahmen im 16 kbit/s-Format bei FR (Full Rate) Übertragung und 8 kbit/s oder auch 16 kbit/s bei HR (Half Rate) Übertragung.

Aus der US 5,091,945 ist es bekannt, anstelle von Sprachdaten nur Signalparameter (Sprachparameter) zu übertragen, aus denen die Nutzdaten wieder rekonstruiert werden können.

### Vorteile der Erfindung

Mit den Maßnahmen gemäß Anspruch 1 ergibt sich eine Verbesserung der Qualität übertragener Daten, insbesondere von GSM-Sprachdaten, insbesondere bei Tandembetrieb bei Verbindungen zwischen mobilen Teilnehmern. Durch die gleichzeitige Übertragung von Abtastwerten, z. B. PCM-Werten, und Signalparametern zur Sprachdatenrekonstruktion sind die Störungen bei einer Transcodiereinrichtung, die nicht für den tandemfreien Betrieb mit transparenter Durchschaltung von TRAU-Rahmen ausgestattet ist, geringer. Denn es werden auch bei der Übertragung von Kennungsinformationen immer noch Sprachdaten im ersten Datenstrom übertragen. Darüber hinaus wird mit den Maßnahmen gemäß Anspruch 1 sichergestellt, daß beim Verbindungsaufbau keine undefinierten Betriebszustände auftreten. Es wird eine zuverlässige Synchronisierung des tandemfreien Betriebes erreicht.

Im Gegensatz zu Lösungen nach dem Stand der Technik werden beim tandemfreien Betrieb immer PCM-Abtastwerte und Signalparameter zur Nutzdatenrekonstruktion parallel und gleichzeitig übertragen, auch wenn unterschiedliche Codierverfahren, z.B. half-rate/full-rate, eingesetzt werden.

Auch bei Handover-Betrieb bietet die Erfindung Vorteile. Die Erfindung ist einfach in bestehende Systeme zu implementieren. Nur die Sprach-Transcoder eines Netzes sind betroffen. Beispielsweise werden von den 8 Bit pro Sprachabtastwert die beiden niedrigwertigsten Bits durch einen TRAU-Rahmen ersetzt (die Sprache wird dann auf 6 Bits reduziert), in welchem Kennungsinformation/Synchroninformation eingeblendet werden kann, um die Transcodiereinrichtungen aufeinander zu synchronisieren.

Bei einem Handover, d. h. bei einem Wechsel auf eine andere Transcodiereinrichtung, kann ein Rahmenverlust schnell festgestellt werden, bzw. vermieden werden, daß ungültige Rahmen als TRAU-Rahmen weiterverarbeitet werden. Eine nicht zum tandemfreien Betrieb ausgestattete Transcodiereinrichtung kann während eines Synchronisationsvorganges schon Sprachabtastwerte verarbeiten. Wenn nach abgeschlossener Synchronisation anstelle der Abtastwerte ein reduziertes Ruhemuster gesendet wird, kann der Sprachdecoder der Transcodiereinrichtung abgeschaltet werden oder für andere Zwecke, z. B. zur Codeumsetzung Full Rate/Half Rate im Downlink-Pfad verwendet werden.

### Zeichnungen

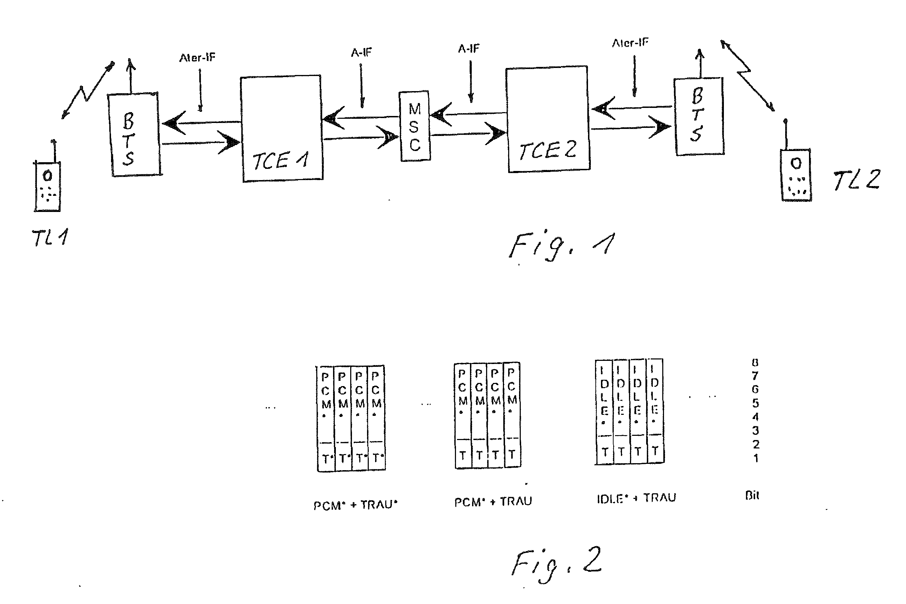

Figur 1 zeigt den Aufbau einer Verbindung zwischen zwei Teilnehmern,
Figur 2 die Daten einer Übertragungsschnittsstelle in zeitlicher Abfolge,
Figur 3 die in Figur 2 verwendeten Muster.
Figur 4 den Handover-Betrieb.

### Beschreibung der Ausführungsbeispiele

Im bestehenden GSM-Netz (Festnetzseite), beispielsweise dem DMCS 900 Netz, wird eine Transcodierung; d. h. eine Umcodierung der Sprachdaten vom vorgegebenen sogenannten TRAU (Transcode and Rate Adaption Unit)-Format nach der GSM-Recommendation 08.60 in das Übertragungsformat des Kommunikationsnetzes, z. B. dem öffentlichen Fernsprechnetz PSTN (PCM-Werte im 64 kbit/s Rahmenformat), stets vorgenommen.

Vom Teilnehmer Tl1 wird eine Verbindung zum Teilnehmer Tl2 geschaltet. Die Transcodiereinrichtung, nachfolgend stets Transcoder genannt, TCE1, die dem Teilnehmer Tl1 zugeordnet ist, sendet im Verkehrskanal des A-Interfaces A-IF eine Kennungsinformation, welche dem zugeschalteten Transcoder TCE2 (Tandem-) signalisiert, daß es sich um eine TFO(tandem free operation)-fähige Transcodiereinrichtung handelt. Die beiden Transcoder schalten, nachdem sie diese Signalisierung erkannt haben, in den TFO-Betrieb und tauschen die Sprachparameter auf. Trifft der Transcoder auf einen nicht TFO-fähigen Transcoder, so erhält dieser die Kennung der Gegenstelle innerhalb einer gewissen Zeit nicht und fällt daher wieder in den normalen Betrieb zurück, in welchem er die Sprache (Sprachabtastwerte) codiert bzw. decodiert.

Die Interfaces von den Transcodern TCE1, TCE2 zu den Teilnehmern Tl1, Tl2, die z. B. über Funkfeststationen BTS anschaltbar sind, sind mit ATER-IF bezeichnet. Die Vermittlung zwischen den Transcodiereinrichtungen ist mit MSC bezeichnet.

### Gesprächsaufbau

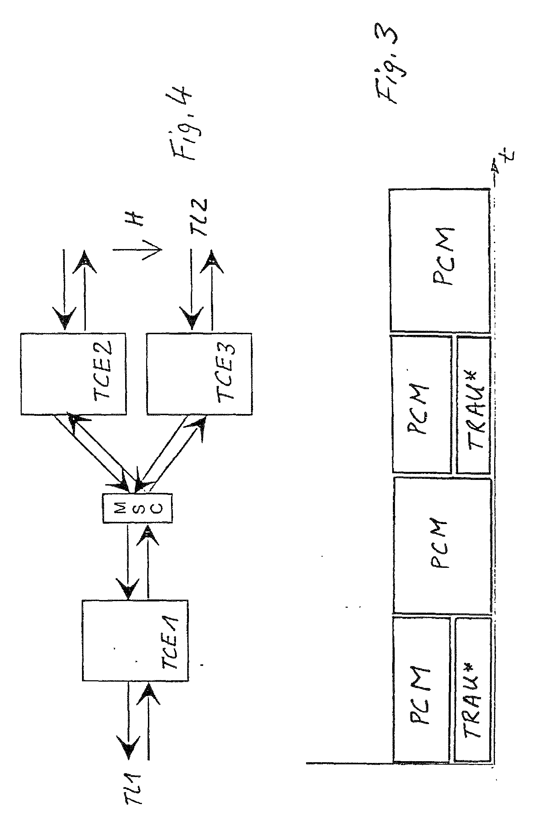

Beim Verbindungsaufbau werden abwechselnd Datenpakete von gleichzeitig übertragenen Abtastwerten und Kennungsinformation TRAU* anstelle der Signalparameter sowie reine Abtastwerte gesendet, wobei die abwechselnde Aussendung solcher Datenpakete so lange aufrecht erhalten wird, z.B. N = 3 mal, bis eine Quittierung TRAU*ACK insbesondere der Kennungsinformation durch die Umcodiereinrichtung TCE2 des Teilnehmers TC2 erfolgt. Eine solche vorteilhafte Verbindungsaufbau-Steuerung ist in Figur 3 dargestellt. Der Grund für eine solche Verbindungsaufbau-Steuerung liegt in der Tatsache, daß eine reale Vermittlungseinrichtung MSC während des Zeitabschnittes von bis zu 1 Sekunde einen unbestimmten Betriebszustand annehmen kann infolge von "loop-back" und/oder offenen Schaltern. Um eine zuverlässige Synchronisierung für den TFO-Betrieb zu erzielen, werden Datenpakete gemäß Figur 3 abwechselnd gesendet. Ausgangspunkt ist ein Übergang von IDLE auf non-IDLE. Zuerst werden TRAU*Rahmen gesendet mit PCM-Abtastwerten bezüglich der höherwertigen Bits. Anschließend werden für eine Verzögerungszeit bis zu 1 Sekunde reine PCM-Abtastwerte gesendet. Dann wieder TRAU*-Rahmen und PCM-Abtastwerte bezüglich höherwertiger Bits und wiederum reine PCM-Abtastwerte. Die abwechselnde Aussendung der Datenpaketewird jedoch nur N mal wiederholt, z.B. N = 3. Wird in diesem Zeitraum keine Quittierung TRAU*ACK von der Umcodiereinrichtung TCE2 empfangen, werden keine TRAU* mehr gesendet, sondern nur reine PCM-Abtastwerte. Es kann dann davon ausgegangen werden, daß die Gegenstelle dieses Format nicht versteht (die Gegenstelle ist nicht für den TFO-Betrieb eingerichtet). Es sind demnach zwei Signalisierungsrahmen vorhanden: 1. TRAU* als TFO-Ankündigung und 2. TRAU*ACK als TFO-Quittierung.

### Arbitrierungs-vorgang

Der Transcoder TCE1 sendet am A-IF Interface anstelle der üblichen 8 Bit-PCM-Abtastwerte nun in den niedrigwertigsten 2 Bits dieser Abtastwerte einen TRAU-Rahmen (dieser wurde bisher zur Übertragung zwischen Funkstation und Transcoder verwendet und enthält Signalparameter zur Nutzdatenrekonstruktion). Der Datenstrom zwischen den Transcodern TCE1 und TCE2 ist demnach unterteilt in einen ersten Datenstrom mit Abtastwerten (PCM-Werten) und einen zweiten Datenstrom mit Signalparametern insbesondere TRAU-Rahmen. Beide Datenströme werden insbesondere während einer verbindungsaufbauphase gleichzeitig übertragen. In einem solchen TRAU-Rahmen wird für eine vorgegebene Zeitdauer eine Kennungsinformation TRAU* gesendet. Sobald der TRAU* von der Gegenstelle erkannt wurde, wird in den TFO-Betrieb geschaltet. Der Vorgang wird von einem Timer T_{sync} überwacht. Läuft dieser ab, wird in den normalen Betrieb übergegangen.

Alternativ können auch n, n<9 Bits für die Signalisierung verwendet werden mit beliebigen Rahmenstrukturen.

Alternativ kann auf die Kennungsinformation TRAU* verzichtet werden und lediglich die TRAU-Rahmen-Synchronisationsinformation herangezogen werden.

Solange die Synchronisation T_{sync} läuft, werden im Anschluß an die Kennungsinformation TRAU* die vom Aₜₑᵣ-IF ankommenden TRAU-Rahmen in den niedrigwertigen 2 Bits des A-IF gesendet. Dies ermöglicht bei der Gegenstelle einen sofortigen Übergang in den TFO-Betrieb nach dem Erhalt von der Kennungsinformation TRAU*. Die höherwertigen 6 Bits der Abtastwerte werden mit den prozessierten höherwertigen 6 Bits PCM* gefüllt. Dies reduziert den Qualitätsverlust, falls die Gegenstelle kein TFO-fähiger Transcoder ist.

Wird innerhalb einer Wiederholungszeit Tᵣₑₚₑₐₜ (Tᵣₑₚₑₐₜ < T_{sync}) kein TRAU* empfangen, wird nochmals ein TRAU* gesendet. Der Zweck dieses zweiten TRAU* ist im Handover-Fall beschrieben.

### TFO-Betrieb (tandemfreier Betrieb)

Nach dem Erkennen des TRAU* am A-IF werden im Anschluß daran die folgenden TRAU Rahmen(-Inhalte) zum Aₜₑᵣ-IF durchgereicht. Die Anpassung der ControlBits sowie das Timing des Aₜₑᵣ-TRAU-Rahmens wird den lokalen Gegebenheiten angepaßt. Unbrauchbare Rahmen von der Gegenstelle (BFI=1, TRAU*) werden durch den vorherigen Rahmen ersetzt und ggf. ein Muting eingeleitet. Ein evtl. Jitter in der TRAU-Rahmenlänge von +/-2Bits muß ebenfalls ausgeglichen werden. Codec-Umsetzungen, DTX und Muting-Funktionen werden ebenfalls in dieser Richtung durchgeführt. Vorteil ist, daß keine Signalisierung im Gespräch erforderlich ist, falls sich die lokalen Gegebenheiten ändern.

Die gesendeten Muster und deren Aufbau sind in der Tabelle am Ende der Beschreibung aufgeführt.

Bei verschiedenen Anwendungen und Betriebsweisen, z.B. bei Einblenden von DTMF-(digital tone multi-frequency) Tönen in der Vermittlungseinrichtung MSC oder bei Multiparty-Betrieb kann die TFO-Synchronität verloren gehen; d.h. es erfolgt eines Zerstörung der Inband-Signalisierung, was zur Folge hat, daß ein Rückfall vom TFO-Mode in den nicht transcoderfreien Mode eintritt. Wenn eine derartige "Störung" eintritt, ist nach Beendigung dieser "Störung" nicht gewährleistet, daß der TFO-Mode wieder aufgenommen wird. Damit ein zuvor bestehender TFO-Mode wieder aufgenommen wird, wird erfindungsgemäß periodisch für eine vorgegebene Zeitdauer in Abständen eine Kennungsinformation TRAU* gesendet. Beispielsweise werden TRAU*-Rahmen periodisch alle 5 Sekunden, z.B. über eine Zeitspanne von 30 Sekunden gesendet. Nach Erkennen dieser TRAU*-Rahmen wird wie beim zuvor beschriebenen Arbitrierungs-Vorgang der TFO-Betrieb aufgenommen. Mit dieser Maßnahme erübrigt sich die Übertragung einer permanenten Signalisierinformation.

### Handover (Figur 4)

Der Handover-Fall von Transcoder TCE2 auf Transcoder TCE3 ist in die drei nachfolgend beschriebenen Fälle zu untergliedern.

### a) Handover H zu einem TFO-fähigen Transcoder

Zunächst wird der Abbruch der ankommenden TRAU-Rahmen registriert und ein Timer Tᵣₑₗₑₐₛₑ gestartet. Der Transcoder empfängt nach einer gewissen Zeit wieder einen TRAU* von dem neu zugeschalteten Transcoder TCE2, stoppt Tᵣₑₗₑₐₛₑ, sendet selbst einen TRAU* und bleibt im TFO-Betrieb. So kann der Transcoder ständig im TFO-Betrieb bleiben.

Kann der erste TRAU* nicht empfangen werden, da die Vermittlung MSC noch nicht durchgeschaltet hat, wird dessen zweiter TRAU* jedoch von TCE3 detektiert und führt zum TFO-Betrieb.

### b) Handover zu einem nicht TFO-fähigen Transcoder

Zunächst wird der Abbruch der ankommenden TRAU-Rahmen registriert und ein Timer Tᵣₑₗₑₐₛₑ gestartet. Der Timer Tᵣₑₗₑₐₛₑ läuft ab und der Transcoder geht wieder in den Arbitrierungszustand, in welchem er die ankommenden Daten am A-IF encodiert. In den abgehenden Datenstom am A-IF fügt er zu den TRAU-Rahmen nun decodierte PCM-Samples "PCM*" ein. Der zuerst gesendete TRAU ist ein TRAU*. Der Timer T_{sync} wird gestartet. Da vor Ablauf des Timers T_{sync} kein TRAU* empfangen wurde, wird in den normalen Betrieb zurückgefallen.

### c) Handover von einem nicht TFO-fähigen Transcoder

War die bisherige Gegenstelle (Transcoder TCE2) nicht TFO-fähig, kann der Transcoder den Handover nicht erkennen. Für die neue Gegenstelle (Transcoder TCE3) ist es jedoch ein normaler Gesprächsaufbau, in welchem sie, falls sie TFO-fähig ist, zuerst einen TRAU* sendet. Diesen empfängt der Transcoder, sendet ebenfalls einen TRAU* und geht in den TFO-Betrieb. Erfolgt die Durchschaltung verzögert, geht der erste TRAU* verloren und der zweite TRAU* nach Tᵣₑₚₑₐₜ führt zum Erfolg.

### Gesprächsabbruch

Das Gesprächsende wird entweder durch den Abbruch der TRAU-Rahmen am Aₜₑᵣ-IF, oder durch detektierte Fehler am A-IF eingeleitet. Der Ablauf ist dann wie im Falle 'Handover zu einem nicht TFO-fähigen Transcoder'.

### Verhalten bei Fehlern im TFO-Betrieb

### a) Einzel-Fehler am A-IF

Einzel-Fehler konnen nicht in den Datenbits der TRAU-Rahmen erkannt werden. Einzel-Fehler konnen nur in den Synchronisationsbits der TRAU-Rahmen erkannt werden. Maßnahmen sind deshalb daraus keine abzuleiten, da keine Aussage über die Datenbits des TRAU-Rahmens gegeben ist.

### b) Burst-Fehler am A-IF

Stark gestörte TRAU-Rahmen ans Ater-IF weiterzuleiten bedeutet, daß evtl. starke Störgeräusche beim Teilnehmer auftreten können. Daher wird bei Detektion eines einzelnen Fehlers von einem Burst-Fehler ausgegangen, der restliche TRAU-Rahmen verworfen und durch den zuvor gesendeten TRAU-Rahmen ersetzt. Folgende Maßnahmen vermeiden diese Störungen weitestgehend:
1. Doppelte Fehlerüberwachung:
1.1 durch die Kontrolle der (TRAU-)Rahmen Synchronisation
1.2 Kontrolle über ein periodisches Muster, beispielsweise eines Modulo-n Zählers, dessen Zählerzustände innerhalb des ersten Datenstromes übertragen werden.
2. Fehlerverschleierungs-Puffer Ein Puffer mit ca. x ms(hier 5 ms) erlaubt die Daten bis zum letzten TRAU Sync-Bit zu speichern und im Fehlerfall durch die zuletzt gültigen Daten zu substituieren.

Ist der Burst sehr lang, wird wie im Fall 'Handover zu einem nicht TFO-fähigen Transcoder', in den normalen Betrieb übergegangen.

**Tabelle**

| Muster | Beschreibung | Wert |
|---|---|---|
| TRAU | TRAU Rahmen gemäß GSM Recommendation 08.60 | |
| IDLE | Idle Pattern des A-IF '01010100' | 01010100 |
| PCM | von Idle verschiedene Daten, z.B. Sprachsamples | |
| TRAU* | spezieller TRAU Rahmen mit Sync-Information | |
| IDLE* | Idle nur in oberen 6 Bits '010101--' | 010101-- |
| PCM* | Sprachdaten nur in oberen 6 Bits | dddddd-- |

Bevorzugte Ausführungsformen der vorliegenden Erfindung ergeben sich aus den folgenden Aspekten:
1. Verfahren zum Übertragen von Daten, insbesondere von GSM-Daten, zwischen einem rufenden und einem gerufenen Teilnehmer (Tl1, Tl2), wobei für das Übertragen ein vorgegebenes Rahmenformat verwendet wird mit folgenden Maßnahmen:
   - der Datenstrom zwischen Umcodiereinrichtungen (TCE1, TCE2), die den Teilnehmern (Tl1, Tl2) zugeordnet sind, wird unterteilt in einen ersten Datenstrom mit Abtastwerten zur Übertragung und in einen zweiten Datenstrom mit Signalparametern zur Nutzdatenrekonstruktion und/oder zur Signalisierung, die zur transparenten Durchschaltung vorgesehen sind, wobei die so unterteilten Datenströme insbesondere während einer Verbindungsaufbauphase gleichzeitig übertragen werden,
   - beim Verbindungsaufbau werden abwechselnd Datenpakete von gleichzeitig übertragenen Abtastwerten und Kennungsinformation (TRAU*) anstelle der Signalparameter sowie reine Abtastwerte gesendet, wobei die abwechselnde Aussendung solcher Datenpakete so lange aufrecht erhalten wird, bis eine Quittierung (TRAU*ACK) insbesondere der Kennungsinformation durch eine Umcodiereinrichtung (TCE2) des Gegenteilnehmers erfolgt.
2. Verfahren nach Aspekt 1, **dadurch gekennzeichnet, dass** nur noch Abtastwerte gesendet werden, wenn nach mehrmaliger Wiederholung, z. B. N = 3, der Datenpakete keine Quittierung (TRAU*ACK) erfolgt.
3. Verfahren nach Aspekt 1 oder 2, **dadurch gekennzeichnet, dass** für die Signalparameter des zweiten Datenstroms die für Mobilfunksysteme bekannten TRAU (Transcoding rate adaption unit) -Rahmen verwendet werden.
4. Verfahren nach einem der Aspekte 1 bis 3, **dadurch gekennzeichnet, dass** der erste Datenstrom aus den höherwertigen Bits einer parallelen Bitsequenz und der zweite Datenstrom aus den entsprechenden niederwertigen Bits dieser Bitsequenz besteht.
5. Verfahren nach Aspekt 4, **dadurch gekennzeichnet, dass** der zweite Datenstrom durch Reduktion der Daten des ersten Datenstromes gebildet wird.
6. Verfahren nach Aspekt 4 oder 5, **dadurch gekennzeichnet, dass** die höherwertigen Bits als PCM-Abtastwerte übertragen werden.
7. Verfahren nach einem der Aspekte 1 bis 6, **dadurch gekennzeichnet, dass** insbesondere zu einem Verbindungsaufbau zwischen den Teilnehmern (Tl1, Tl2) anstelle der Signalparameter für eine vorgegebene Zeitdauer eine Kennungsinformation (TRAU*) gesendet wird.
8. Verfahren nach einem der Aspekte 1 bis 7, **dadurch gekennzeichnet, dass** während einer bestehenden Verbindung, insbesondere bei Verlust der transparenten Durchschaltung, periodisch für eine vorgegebene Zeitdauer in Abständen Kennungsinformationen (TRAU*) gesendet werden.
9. Verfahren nach einem der Aspekte 1 bis 8, **dadurch gekennzeichnet, dass** nach dem Aussenden der Datenpakete TRAU-Rahmen mit PCM-Abtastwerten bezüglich der höherwertigen Bits gesendet werden.
10. Verfahren nach einem der Aspekte 1 bis 9, **dadurch gekennzeichnet, dass** jene Umcodiereinrichtung (TCE2), die einem gerufenen Teilnehmer (Tl2) zugeordnet ist, nach Erhalt der Kennungsinformation (TRAU*) von der Umcodiereinrichtung (TCE1), die dem rufenden Teilnehmer (Tl1) zugeordnet ist, in den tandemfreien Übertragungsmode übergeht; d. h. die Signalparameter/Trau-Rahmen transparent durchschaltet.
11. Verfahren nach einem der Aspekte 3 bis 10, **dadurch gekennzeichnet, dass** fehlerhafte TRAU-Rahmen von der Gegenstelle durch vorherige TRAU-Rahmen ersetzt werden und ggf. ein Muting eingeleitet wird.
12. Verfahren nach einem der Aspekte 3 bis 11, **dadurch gekennzeichnet, dass** bei Abbruch einer Verbindung ein Zähler (Timer T_{Release}) gesetzt wird, dass im Falle des Empfangs einer Kennungsinformation (TRAU*) innerhalb einer vorgegebenen Zählzeit (Tᵣₑₗₑₐₛₑ) von einer neu zugeschalteten Umcodiereinrichtung (TCE3) der tandemfreie Übertragungsmode aufrechterhalten wird, dass bei Nichtempfang dieser Kennungsinformation (TRAU*) eine weitere Kennungsinformation (TRAU*) gesendet wird und der tandemfreie Übertragungsmode bei fehlender Synchronisation abgebrochen wird.
13. Verfahren nach einem der Aspekte 3 bis 12, **dadurch gekennzeichnet, dass** die jeweils zuletzt gesendeten Daten zwischengespeichert werden und zu einer Fehlerverschleierung fehlerhafte Daten ersetzen.

## Patentansprüche

1. Verfahren zum Übertragen von Daten, insbesondere von GSM-Daten, zwischen einem rufenden Teilnehmer (TL1), dem eine erste Umcodiereinrichtungen (TCE1) zugeordnet ist und einem gerufenen Teilnehmer (TL2), dem eine zweite Umcodiereinrichtungen (TCE2) zugeordnet ist, wobei für das Übertragen ein vorgegebenes Rahmenformat verwendet wird, mit folgenden Maßnahmen:
der Datenstrom zwischen den Umcodiereinrichtungen (TCE1, TCE2) wird unterteilt in einen ersten Datenstrom mit Abtastwerten zur Übertragung und in einen zweiten Datenstrom mit Signalparametern zur Nutzdatenrekonstruktion, die zur transparenten Durchschaltung vorgesehen sind,
wobei die so unterteilten Datenströme gleichzeitig übertragbar sind,
wobei beim Verbindungsaufbau abwechselnd Datenpakete von gleichzeitig übertragenen Abtastwerten und Kennungsinformation (TRAU*) als TFO Ankündigung sowie reine Abtastwerte gesendet werden
und dass nur noch Abtastwerte gesendet werden, wenn nach mehrmaliger Wiederholung, z. B. N = 3, der Datenpakete keine Quittierung (TRAU*ACK) erfolgt.

2. Verfahren nach Anspruch 1, **dadurch gekennzeichnet, dass** für die Signalparameter des zweiten Datenstroms die für Mobilfunksysteme bekannten TRAU (Transcoding rate adaption unit) -Rahmen verwendet werden.

3. Verfahren nach einem der Ansprüche 1 bis 2, **dadurch gekennzeichnet, dass** der erste Datenstrom aus den höherwertigen Bits einer parallelen Bitsequenz und der zweite Datenstrom aus den entsprechenden niederwertigen Bits dieser Bitsequenz besteht.

4. Verfahren nach Anspruch 3, **dadurch gekennzeichnet, dass** der zweite Datenstrom durch Reduktion der Daten des ersten Datenstromes gebildet wird.

5. Verfahren nach Anspruch 3 oder 4, **dadurch gekennzeichnet, dass** die höherwertigen Bits als PCM-Abtastwerte übertragen werden.

6. Verfahren nach einem der Ansprüche 1 bis 5, **dadurch gekennzeichnet, dass** insbesondere zu einem Verbindungsaufbau zwischen den Teilnehmern (Tl1, Tl2) anstelle der Signalparameter für eine vorgegebene Zeitdauer eine Kennungsinformation (TRAU*) gesendet wird.

7. Verfahren nach einem der Ansprüche 1 bis 6, **dadurch gekennzeichnet, dass** während einer bestehenden Verbindung, insbesondere bei Verlust der transparenten Durchschaltung, periodisch für eine vorgegebene Zeitdauer in Abständen Kennungsinformationen (TRAU*) gesendet werden.

8. Verfahren nach einem der Ansprüche 1 bis 7, **dadurch gekennzeichnet, dass** nach dem Aussenden der Datenpakete TRAU-Rahmen mit PCM-Abtastwerten bezüglich der höherwertigen Bits gesendet werden.

9. Verfahren nach einem der Ansprüche 1 bis 8, **dadurch gekennzeichnet, dass** jene Umcodiereinrichtung (TCE2), die dem gerufenen Teilnehmer (Tl2) zugeordnet ist, nach Erhalt der Kennungsinformation (TRAU*) von der Umcodiereinrichtung (TCE1), die dem rufenden Teilnehmer (Tl1) zugeordnet ist, in den tandemfreien Übertragungsmode übergeht; d. h. die Signalparameter/Trau-Rahmen transparent durchschaltet.

10. Verfahren nach einem der Ansprüche 2 bis 9, **dadurch gekennzeichnet, dass** fehlerhafte TRAU-Rahmen von der Gegenstelle durch vorherige TRAU-Rahmen ersetzt werden und ggf. ein Muting eingeleitet wird.

11. Verfahren nach einem der Ansprüche 2 bis 10, **dadurch gekennzeichnet, dass** bei Abbruch einer Verbindung ein Zähler (Timer Tᵣₑₗₑₐₛₑ) gesetzt wird, dass im Falle des Empfangs einer Kennungsinformation (TRAU*) innerhalb einer vorgegebenen Zählzeit (Tᵣₑₗₑₐₛₑ) von einer neu zugeschalteten Umcodiereinrichtung (TCE3) der tandemfreie Übertragungsmode aufrechterhalten wird, dass bei Nichtempfang dieser Kennungsinformation (TRAU*) eine weitere Kennungsinformation (TRAU*) gesendet wird und der tandemfreie Übertragungsmode bei fehlender Synchronisation abgebrochen wird.

12. Verfahren nach einem der Ansprüche 2 bis 11, **dadurch gekennzeichnet, dass** die jeweils zuletzt gesendeten Daten zwischengespeichert werden und zu einer Fehlerverschleierung fehlerhafte Daten ersetzen.

13. Verfahren zur Anpassung von TRAU-Rahmen in einer lokalen Umkodiereinrichtung (TCE1) nach Erkennen einer Kennungsinformation (TRAU*) von einer fernen Umkodiereinrichtung (TCE2), wobei die im Anschluss daran folgenden TRAU-Rahmen zumindest in ihren Kontrollbits sowie dem Timing den lokalen Gegebenheiten angepasst werden.
